# EUROPEAN PATENT APPLICATION

(11) **EP 4 571 941 A1**
(43) Date of publication of application: **18.06.2025**
(21) Application number: 23936305.4
(22) Date of filing: 10.08.2023
(51) Int. Cl.: H01M 10/613, H01M 10/617, H01M 10/6555, H01M 10/6551, H01M 10/653, H01M 10/625, H01M 10/6556

(54) **BATTERY AND ELECTRICAL APPARATUS**

(30) Priority: 06.05.2023 CN 202310502932
(71) Applicant: Contemporary Amperex Technology (Hong Kong) Limited, Central (HK)
(72) Inventor: WU, Kai, Ningde, Fujian 352100 (CN); QIN, Feng, Ningde, Fujian 352100 (CN); ZHANG, Haidong, Ningde, Fujian 352100 (CN)
(74) Representative: Laufhütte, Dieter
(86) International application number: PCT/CN2023/112163
(87) International publication number: WO 2024/229999

(57) **Abstract**

Disclosed are a battery and an electric apparatus. The battery includes: a housing having an accommodating space; battery units disposed in the accommodating space, where the battery unit includes a plurality of battery cells disposed side by side along a first direction, and the plurality of battery units are disposed side by side along a second direction, the first direction intersecting with the second direction intersect; and at least two battery cells in the plurality of battery units have different chemical systems; and a thermal management assembly disposed in the accommodating space, where the thermal management assembly includes a heat exchange plate, the heat exchange plate is disposed on at least one side of the battery units in the second direction, the heat exchange plate is connected to the plurality of battery cells of the battery units, and the heat exchange plate is configured to accommodate a heat exchange medium to adjust temperature of the plurality of battery cells of the battery units. The reliability of the battery can be improved.

## Description

### CROSS-REFERENCE TO RELATED APPLICATIONS

This application claims priority to Chinese Patent Application No. 202310502932.5, filed on May 06, 2023 and entitled "BATTERY AND ELECTRIC APPARATUS", which is incorporated herein by reference in its entirety.

### TECHNICAL FIELD

This application relates to the field of energy storage, and in particular, to a battery and an electric apparatus.

### BACKGROUND

Energy conservation and emission reduction are key to sustainable development of the automobile industry. Electric vehicles have become an important part of the sustainable development of the automobile industry by virtue of energy saving and environmental friendliness. Battery technology is crucial to development of electric vehicles.

With the development of new energy vehicles, higher requirements are imposed on the reliability of batteries.

### SUMMARY

In view of the above problem, this application provides a battery and an electric apparatus that can improve the reliability of the battery.

According to a first aspect, this application provides a battery, including: a housing having an accommodating space; battery units disposed in the accommodating space, where the battery units include a plurality of battery cells disposed side by side along a first direction, the plurality of battery units are disposed side by side along a second direction, the first direction and the second direction intersect, and at least two battery cells in the plurality of battery units have different chemical systems; and a thermal management assembly disposed in the accommodating space, where the thermal management assembly includes a heat exchange plate, the heat exchange plate is disposed on at least one side of the battery units in the second direction, the heat exchange plate is connected to the plurality of battery cells of the battery units, and the heat exchange plate is configured to accommodate a heat exchange medium to adjust temperature of the plurality of battery cells of the battery units.

In the technical solution of the embodiment of this application, the battery includes the housing, the battery units and the thermal management assembly, and the battery units and the thermal management assembly are disposed in the housing. The housing can provide the accommodating space configured to accommodate the battery units and the thermal management assembly. The battery units include the plurality of battery cells, and the battery cells are configured to store energy. At least two battery cells in the plurality of battery units have different chemical systems. By reasonably selecting the battery cells with different chemical systems and integrating the advantages of the battery cells with different chemical systems, the reliability of the battery can be improved. The heat exchange plate of the thermal management assembly is disposed on a side of the battery units, and the heat exchange plate can accommodate the heat exchange medium and be configured to adjust the temperature of the battery cells. For example, the heat exchange plate can accommodate a cooling medium to reduce an operating temperature of the battery cells, thereby alleviating the reliability problem of the battery cells caused by overhigh temperature, and further improving the reliability of the battery.

In some embodiments, the battery cell includes a first surface, the first surface is a surface with the largest area in the battery cell, and the heat exchange plate is connected to the first surface of the battery cell.

In the embodiments, the surface with the largest area in the battery cell is connected with the heat exchange plate, which can improve the efficiency of the heat exchange plate in adjusting the temperature of the battery cell, for example, the battery cell can be cooled faster, and the reliability of the battery can be further improved.

In some embodiments, the battery cell includes two first surfaces opposite each other along the second direction, and at least one of the first surfaces is connected to the heat exchange plate.

In the embodiments, the battery cell includes two first surfaces with large areas, and at least one of the first surfaces is connected to the heat exchange plate, which can ensure the temperature adjustment efficiency of the battery cell, and is also convenient for the heat exchange plate to be disposed on either side of the battery cell in the second direction.

In some embodiments, the plurality of battery cells in one battery unit have the same chemical system.

In the embodiments, expansion rates and generated heat of the plurality of battery cells in one battery unit are closer, and the heat exchange plate can better adjust the temperature of the battery cells at a side of the battery unit. The problem of local stress concentration caused by inconsistent expansion rates of the plurality of battery cells in the battery unit can be alleviated, and the problem of uneven temperature caused by inconsistent heat generated by the plurality of battery cells in the battery unit can also be alleviated.

In some embodiments, the plurality of the battery units include a first battery unit and a second battery unit adjacent to each other along the second direction, the battery cells of the first battery unit and the battery cells of the second battery unit have different chemical systems, and the heat exchange plate is disposed between the first battery unit and the second battery unit.

In the embodiments, the respective chemical systems of the plurality of battery cells in the first battery unit and the second battery unit are the same, but the chemical systems of the battery cells in the first battery unit are different from the chemical systems of the battery cells in the second battery unit. By reasonably selecting the chemical systems of the battery cells in the first battery unit and the second battery unit, the comprehensive advantages of the battery can be improved. The heat exchange plate is disposed between the first battery unit and the second battery unit, such that the heat exchange plate can adjust the temperature of the battery cells in the first battery unit and can also adjust the temperature of the battery cells in the second battery unit, and the reliability of the battery can be further improved.

In some embodiments, the first battery unit and the second battery unit are alternately arranged along the second direction.

In the embodiments, the alternate arrangement of the first battery unit and the second battery unit can balance the comprehensive performance of the battery.

In some embodiments, the battery cells of the first battery units are sodium-ion battery cells, and the battery cells of the second battery unit are lithium-ion battery cells; or
the battery cells of the first battery units are lithium iron phosphate battery cells, and the battery cells of the second battery unit are ternary battery cells.

In the embodiments, when the battery cells of the first battery units are the sodium-ion battery cells and the battery cells of the second battery unit are the lithium-ion battery cells, the battery cells of the first battery unit generate less heat and have better low temperature resistance, while the battery cells of the second battery unit has higher energy density and longer cycle life. Therefore, the battery can have the advantages of less generated heat, low temperature resistance, high energy density and long cycle life. When the battery cells of the first battery units are the lithium iron phosphate battery cells and the battery cells of the second battery unit are the ternary battery cells, the battery cells of the first battery unit generate less heat, while the battery cells of the second battery unit has higher energy density. Therefore, the battery has the advantages of less generated heat and high energy density.

In some embodiments, two first battery units and two second battery units are alternately arranged along the second direction, and the heat exchange plate is disposed between two adjacent second battery units.

In the embodiments, less heat is generated by the battery cells in the first battery unit, more heat is generated by the battery cells in the second battery unit, the heat exchange plate is disposed between two adjacent second battery units to better adjust the temperature of the plurality of battery cells in the second battery unit, but the heat exchange plate is not disposed between two adjacent first battery units, such that two first battery units and two second battery units are alternately arranged along the second direction, and the structure of the battery can be simplified on the premise of ensuring the reliability of the battery.

In some embodiments, two first battery units and a single second battery unit are alternately arranged along the second direction.

In the embodiments, two first battery units are disposed corresponding to one second battery unit, that is, a quantity of battery units with low heat generation in the battery is large, which can improve the reliability of the battery.

In some embodiments, the heat exchange plate is disposed on at least one side of the first battery unit in the second direction, and the heat exchange plates are disposed on both sides of the second battery unit in the second direction.

In the embodiments, less heat is generated by the battery cells in the first battery unit, such that the reliability of the first battery unit can be ensured by disposing the heat exchange plate on at least one side of the first battery unit. However, more heat is generated by the second battery unit, and the reliability of the battery can be further improved by disposing the heat exchange plates on both sides of the second battery unit.

In some embodiments, the battery cells of at least two adjacent first battery units are bonded to each other.

In the embodiments, at least two adjacent battery cells in the first battery unit are bonded to each other, which can simplify the structure of the battery.

In some embodiments, the heat exchange plate is bonded to the battery cells of the first battery unit through a first bonding layer, the heat exchange plate is bonded to the battery cells of the second battery unit through a second bonding layer, and a thermal conductivity coefficient of the second bonding layer is greater than a thermal conductivity coefficient of the first bonding layer.

In the embodiments, more heat is generated by the battery cells in the second battery unit, and the thermal conductivity coefficient of the second bonding layer is high, such that the heat exchange plate can better adjust the temperature of the battery cells in the second battery unit, and the reliability of the battery can be further improved.

In some embodiments, the heat exchange plate is bonded to the battery cells of the first battery unit through a first bonding layer, the heat exchange plate is bonded to the battery cells of the second battery unit through a second bonding layer, and a thickness of the second bonding layer in the second direction is less than a thickness of the first bonding layer in the second direction.

In the embodiments, the thickness of the second bonding layer is small, such that heat can be transferred between the heat exchange plate and the battery cells of the second battery unit more quickly, and the heat exchange plate can adjust the temperature of the battery cells in the second battery unit more quickly.

In some embodiments, the housing includes a wall portion enclosing to form the accommodating space, and the battery cells of the battery unit adjacent to the wall portion include sodium-ion battery cells and/or lithium iron phosphate battery cells.

In the embodiments, the battery cells of the battery unit adjacent to the wall portion are the sodium-ion battery cells and/or the lithium iron phosphate battery cells, expansion force of the sodium-ion battery cells and/or the lithium iron phosphate battery cells is low, and the sodium-ion battery cells and/or the lithium iron phosphate battery cells are adjacent to the wall portion so as to alleviate the reliability problem caused by the deformation of the wall portion and further improve the reliability of the battery.

In some embodiments, the plurality of battery cells in one battery unit have a same size in the second direction.

In the embodiments, the battery cells in one battery unit have the same size in the second direction, the heat exchange plate disposed on a side of the battery unit in the second direction may be disposed corresponding to the plurality of battery cells of one battery unit, and a surface of the heat exchange plate facing towards the battery unit may be disposed in a plane shape, which is conducive to simplifying the structure of the heat exchange plate.

According to a second aspect, an embodiment of this application further provides an electric apparatus, including the battery according to any first aspect mentioned above. The battery is configured to provide electrical energy.

The foregoing description is merely an overview of the technical solutions of this application. The following describes specific embodiments of this application illustratively to enable a clearer understanding of the technical solutions of this application, enable embodiments of the technical solutions based on the content of the specification, and make the foregoing and other objectives, features, and advantages of this application more evident and comprehensible.

### BRIEF DESCRIPTION OF DRAWINGS

By reading the following detailed description of preferred implementations, those of ordinary skill in the art become clearly aware of various other advantages and benefits. The accompanying drawings are merely intended to illustrate the preferred implementations, but not to limit this application. Moreover, in all the accompanying drawings, the same reference numeral represents the same component. In the accompanying drawings:
FIG. 1 is a schematic structural diagram of a vehicle according to an embodiment of this application;
FIG. 2 is a schematic structural diagram of a battery according to an embodiment of this application;
FIG. 3 is a schematic structural diagram of a battery cell of a battery unit of a battery according to an embodiment of this application;
FIG. 4 is a vertical view of a partial structure of a battery according to an embodiment of this application;
FIG. 5 is a schematic structural diagram of a battery unit of a battery according to another embodiment of this application; and
FIG. 6 is a side view of a partial structure of a battery according to an embodiment of this application.

List of reference signs:
1. Vehicle; 10. Battery; 11. Controller; 12. Motor;
100. Housing; 101. First housing portion; 102. Second housing portion; 110. Accommodating space; 120, Wall portion;
200. Battery unit; 201. First battery unit; 202. Second battery unit; 210, Battery cell; 211. First surface; 212. Second surface; 213. First end face; 214. Electrode terminal;
300. Thermal management assembly; 310. Heat exchange plate; 320. Heat exchange pipeline;
410. First bonding layer; 420. Second bonding layer;
X. First direction; Y. Second direction; and Z. Third direction.

### DESCRIPTION OF EMBODIMENTS

Embodiments of the technical solutions of this application are described in detail below with reference to the accompanying drawings. The following embodiments are merely intended for a clearer description of the technical solutions of this application and therefore are used as just examples which do not constitute any limitations on the protection scope of this application.

It is hereby noted that, unless otherwise specified, the technical terms or scientific terms used in embodiments of this application bear the meanings commonly understood by a person skilled in the technical field of embodiments of this application.

In the description of the embodiments of this application, a direction or a positional relationship indicated by the terms such as "center", "longitudinal", "transverse", "length", "width", "thickness", "up", "down", "before", "after", "left", "right", "vertical", "horizontal", "top", "bottom", "in", "out", "clockwise", "counterclockwise", "axial", "radial", and "circumferential" is a direction or positional relationship based on the illustration in the accompanying drawings, and is merely intended for ease or brevity of description of embodiments of this application, but not intended to indicate or imply that the indicated apparatus or component is necessarily located in the specified direction or constructed or operated in the specified direction. Therefore, such terms are not to be understood as a limitation on the embodiments of this application.

In addition, the technical terms "first," "second" and the like are for descriptive purposes only and cannot be construed as indicating or implying relative importance or implying the quantity of the indicated technical features. In the description of the embodiments of this application, unless otherwise expressly specified, "a plurality of" means two or more.

In the description of the embodiments of this application, unless otherwise expressly specified and defined, the technical terms such as "mounting", "concatenation", "connection", and "fixing" need to be understood in a broad sense, for example, understood as a fixed connection or a detachable connection or integrally formed; or understood as a mechanical connection or an electrical connection; understood as a direct connection, or an indirect connection implemented through an intermediate medium; or understood as internal communication between two components or interaction between two components. To a person of ordinary skill in the art, specific meanings of the above terms in the embodiments of this application may be construed as dependent on specific situations.

In the description of the embodiments of this application, unless otherwise expressly specified and defined, a first feature being "on" or "under" a second feature may mean that the first feature is in direct contact with the second feature, or the first feature is in indirect contact with the second feature through an intermediate medium. In addition, a first feature being "on", "above", or "over" a second feature may be that the first feature is exactly above or obliquely above the second feature, or simply that the first feature is at an altitude higher than the second feature. A first feature being "under", "below", or "beneath" a second feature may be that the first feature is exactly under or obliquely under the second feature, or simply that the first feature is at an altitude lower than the second feature.

Currently, as can be seen from the market trend, the application of traction batteries is increasingly extensive. Traction batteries are not only used in energy storage power systems such as hydro, thermal, wind, and solar power stations, but also widely used in electric transport such as electric bicycles, electric motorcycles, and electric vehicles, and used in many other fields such as military equipment and aerospace. The market demand for traction batteries keeps soaring with the increase of the application fields of the power batteries.

In this application, a battery cell may be a lithium-ion secondary battery cell, a lithium-ion primary battery cell, a lithium-sulfur battery cell, a sodium-ion battery cell, or the like. The type of the battery cell is not limited in the embodiments of this application herein.

The battery mentioned in the embodiments of this application means a stand-alone physical module that includes one or more battery cells to provide a higher voltage and a higher capacity. For example, the battery mentioned in this application may include a battery module, a battery pack, or the like. A battery generally includes a housing configured to encapsulate one or more battery cells. The housing prevents liquid or other foreign matters from affecting the charging or discharging of the battery cells.

A battery cell includes an electrode assembly and an electrolyte. The electrode assembly includes a positive electrode plate, a negative electrode plate, and a separator. The battery cell works primarily by shuttling metal ions between the positive electrode plate and the negative electrode plate. The positive electrode plate includes a positive electrode current collector and a positive electrode active material layer. The positive electrode active material layer is applied onto a surface of the positive electrode current collector. The positive electrode current collector includes a positive electrode current collecting portion and a positive tab connected to the positive electrode current collecting portion. The positive electrode current collecting portion is coated with the positive electrode active material layer, and the positive tab is not coated with the positive electrode active material layer. Taking a lithium-ion battery as an example, the positive electrode current collector may be made of such a material as aluminum, and the positive electrode active material layer includes a positive electrode active material which may be lithium cobalt oxide, lithium iron phosphate, ternary lithium, lithium manganate oxide, or the like. The negative electrode plate includes a negative electrode current collector and a negative electrode active material layer. The negative electrode active material layer is applied onto a surface of the negative electrode current collector. The negative electrode current collector includes a negative electrode current collecting portion and a negative tab connected to the negative electrode current collecting portion. The negative electrode current collecting portion is coated with the negative electrode active material layer, and the negative tab is not coated with the negative electrode active material layer. The negative electrode current collector may be made of such a material as copper, and the negative electrode active material layer includes a negative electrode active material which may be carbon or silicon, or the like. The separator may be made of a material such as PP (polypropylene, polypropylene) or PE (polyethylene, polyethylene).

The inventor of this application noticed that battery cells with different chemical systems have different advantages, it is difficult to integrate the advantages of battery cells with different chemical systems in a current battery, and the battery will generate a large amount of heat in the use process, thus leading to the problem of reduced reliability of the battery.

To alleviate the above technical problems, the inventor found that two or more kinds of battery cells with different chemical systems can be disposed in the battery to form different battery units, and a thermal management assembly is disposed in the battery, such that a heat exchange plate of the thermal management assembly is disposed on a side of the battery units to adjust the temperature of the battery cells in the battery units, thereby effectively reducing the reliability risk of the battery and improving the reliability of the battery.

The technical solution described in the embodiments of this application is applicable to a battery and an electric apparatus using the battery.

The electric apparatus may be a vehicle, a mobile phone, a portable device, a notebook computer, a ship, a spacecraft, an electric toy, an electric tool, or the like. The vehicle may be an oil-fueled vehicle, a natural gas vehicle, or a new energy vehicle. The new energy vehicle may be a battery electric vehicle, a hybrid electric vehicle, an extended-range electric vehicle, or the like. The spacecraft includes an airplane, a rocket, a space shuttle, a spaceship, and the like. The electric toy includes a fixed or mobile electric toy, such as a game console, an electric car toy, an electric ship toy, an electric airplane toy, and the like. The power tool includes an electrical metal cutting tool, an electrical grinding tool, an electrical assembling tool, and a power tool for use in railways. Examples of the power tool are an electrical drill, an electrical grinder, an electrical wrench, an electrical screwdriver, an electrical hammer, an electrical impact drill, a concrete vibrator, an electrical planer, and the like. The type of the above electric apparatus is not particularly limited in the embodiments of this application.

Understandably, the technical solutions described in the embodiments of this application are not only applicable to the battery and electric apparatus described above, but also applicable to all batteries including a housing and all electric apparatuses using the batteries. However, for brevity, the following embodiments are described by using an electric vehicle as an example.

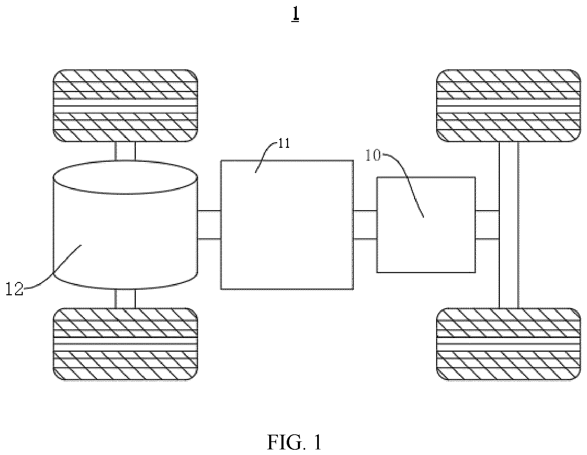

Referring to FIG. 1, FIG. 1 is a schematic structural diagram of a vehicle 1 according to some embodiments of this application. The vehicle 1 may be an oil-fueled vehicle, a natural gas vehicle, or a new energy vehicle. The new energy vehicle may be a battery electric vehicle, a hybrid electric vehicle, an extended-range electric vehicle, or the like. A battery 10 is disposed inside the vehicle 1. The battery 10 may be disposed at the bottom, front, or rear of the vehicle 1. The battery 10 may be configured to supply power to the vehicle 1. For example, the battery 10 may serve as an operating power supply of the vehicle 1. The vehicle 1 may further include a controller 11 and a motor 12. The controller 11 is configured to control the battery 10 to supply power to the motor 12, for example, to meet electrical energy requirements in starting, navigating, or running the vehicle 1.

In some embodiments of this application, the battery 10 serves not only as an operating power supply of the vehicle 1, but may also serve as a driving power supply of the vehicle 1 to provide driving power for the vehicle 1 in place of or partly in place of fuel oil or natural gas.

To meet different power use requirements, the battery 10 may include a plurality of battery cells. A battery cell is a minimum unit that makes up a battery module or battery pack. A plurality of battery cells may be connected together in series and/or parallel through electrode terminals, so as to be applied in various scenarios. The battery mentioned in this application includes a battery module or a battery pack. The plurality of battery cells may be connected in series, parallel, or series-and-parallel pattern. The series-and-parallel pattern means a combination of series connection and parallel connection. In the embodiments of this application, the plurality of battery cells may directly make up a battery pack, or form battery modules that are then used to form the battery pack.

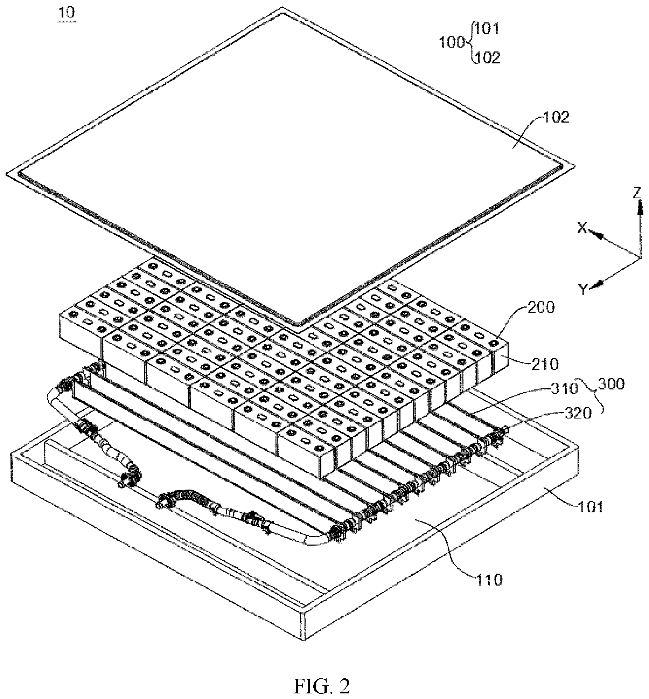

FIG. 2 is a schematic structural diagram of a battery 10 according to an embodiment of this application.

As shown in FIG. 2, a battery 10 includes a housing 100, battery units 200 and a thermal management assembly 300. The housing 100 has an accommodating space 110. The battery units 200 are disposed in the accommodating space 110, the battery units 200 include a plurality of battery cells 210 disposed side by side along a first direction X, the plurality of battery units 200 are disposed side by side along a second direction Y, the first direction X and the second direction Y intersect, and at least two battery cells 210 in the plurality of battery units 200 have different chemical systems. The thermal management assembly 300 is disposed in the accommodating space 110, the thermal management assembly 300 includes heat exchange plates 310, the heat exchange plates 310 are disposed on at least one side of the battery units 200 in the second direction Y, the heat exchange plates 310 are connected to the plurality of battery cells 210 of the battery units 200, and the heat exchange plates 310 are configured to accommodate heat exchange media to adjust temperature of the plurality of battery cells 210 of the battery units 200.

The housing 100 may be a simple three-dimensional structure such as a stand-alone cuboid or cylinder or sphere, or may be a complex three-dimensional structure compounded of simple three-dimensional structures such as cuboids, cylinders or spheres, which is not limited in the embodiments of this application. The material of the housing 100 may be an alloy material such as aluminum alloy or iron alloy, or a high polymer material such as polycarbonate or polyisocyanurate foam plastic, or a composite material compounded of glass fiber and epoxy resin, which is not limited in the embodiments of this application.

The housing 100 is configured to accommodate the battery units 200. The housing 100 may be one of various structures. In some embodiments, the housing 100 may include a first housing portion 101 and a second housing portion 102, the first housing portion 101 and the second housing portion 102 are mutually covered, and the first housing portion 101 and the second housing portion 102 together define the accommodating space 110 configured to accommodate the battery units 200. The first housing portion 101 may be of a hollow structure with one end opening, the second housing portion 102 is of a plate structure, and the second housing portion 102 covers the open side of the first housing portion 101 to form the housing 100 having the accommodating space 110. Both the first housing portion 101 and the second housing portion 102 may be of hollow structures with one side opening, and the open side of the first housing portion 101 covers the open side of the second housing portion 102 to form the housing 100 having the accommodating space 110. Certainly, the first housing portion 101 and the second housing portion 102 may be in various shapes, such as a cylinder, or a cuboid.

To improve the sealing performance after the first housing portion 101 and the second housing portion 102 are connected, a sealing member, such as a sealant or a sealing ring, may be disposed between the first housing portion 101 and the second housing portion 102.

Assuming that the second housing portion 102 covers the top of the first housing portion 101, the second housing portion 102 may also be referred to as an upper housing, and the first housing portion 101 may also be referred to as a lower housing.

Optionally, the plurality of battery cells 210 may be connected in series, parallel, or series-and-parallel pattern. The series-and-parallel pattern means a combination of series connection and parallel connection of the plurality of battery cells 210. The plurality of battery cells 210 may be directly connected in series, parallel, or series-and-parallel pattern, and then the whole of the plurality of battery cells 210 may be accommodated in the housing 100. Certainly, the plurality of battery cells 210 may be connected in series, parallel, or series-and-parallel pattern to form the battery units 200 first, and the plurality of battery units 200 are then connected in series, parallel, or series-and-parallel pattem to form a whole to be accommodated in the housing 100.

Optionally, the battery cell 210 further includes a shell, and the shell may be configured to accommodate an electrode assembly, an electrolyte (not shown in the figure) and other components. Each battery cell 210 may further include an end cover covering an opening of the shell, the shell and the end cover may be independent components, an opening may be provided on the housing, and the internal environment of the battery cell 210 may be formed by covering the opening with the end cover. Not restrictively, the end cover and the shell may be integrated instead. Specifically, a common junction surface may be formed between the end cover and the shell first before other components are encased in the shell. Subsequently, when the shell needs to be internally sealed, the end cover is made to cover the shell. The shell may be in various shapes and sizes, such as a rectangular shape, a cylindrical shape, and a hexagonal prism shape. Specifically, the shape of the shell may be determined based on a specific shape and size of the electrode assembly. The shell may be made of a variety of materials such as copper, iron, aluminum, stainless steel, aluminum alloy, or plastic, which is not particularly limited in the embodiments of this application.

In this application, the battery cells 210 may be lithium-ion battery cells, sodium-ion battery cells, or magnesium-ion battery cells, or the like, which is not limited in the embodiments of this application. The battery cells 210 may be cylindrical, or in other shapes. For brevity, the following embodiments are described by using a prismatic cell as an example. The prismatic cell refers to a battery cell in a quadrangular prism shape.

The chemical systems of the battery cells 210 are divided according to positive electrode active materials of the battery cells 210, and there is no limitation on auxiliary materials doped or added, that is, the battery cells with different chemical systems mean that the positive electrode active materials of the battery cells 210 are different.

In some embodiments, the battery cells 210 may be defined as lithium-ion battery cells when the positive electrode active materials include a lithium-containing polyanionic compound, a lithium transition metal oxide and doped or coated modified compounds thereof. The lithium-containing polyanionic compound includes lithium-containing phosphate, lithium-containing sulfate, lithium-containing silicate, lithium-containing pyrophosphate and modified compounds thereof. The lithium transition metal oxide includes a lithium cobalt oxide, a lithium nickel oxide, a lithium manganese oxide, a lithium nickel cobalt oxide, a lithium manganese cobalt oxide, a lithium nickel manganese oxide, a lithium nickel cobalt manganese oxide, a lithium nickel cobalt aluminum oxide, or modified compounds thereof.

In some embodiments, the battery cells 210 may be defined as sodium-ion battery cells when a main body of the positive electrode active materials is a sodium-containing layered transition metal oxide, a Prussian blue compound, a polyanionic compound and doped or coated modified compounds thereof.

The lithium-ion battery cells may be divided into lithium iron phosphate battery cells, ternary battery cells, and the like. The lithium iron phosphate battery cells refer to the battery cells 210 when the positive electrode active materials contain lithium iron phosphate, lithium manganese iron phosphate, lithium vanadium iron phosphate and doped or coated modified compounds thereof, and a mass ratio of the above materials in the positive electrode active materials is more than 50%. The ternary battery cells refer to the battery cells 210 when the positive electrode active materials contain a lithium nickel cobalt manganese oxide, and/or a lithium nickel cobalt aluminum oxide and modified compounds thereof, and a mass ratio of the above materials in the positive electrode active materials is more than 50%.

Optionally, the thermal management assembly 300 includes a plurality of heat exchange plates 310. Optionally, the thermal management assembly 300 further includes a heat exchange pipeline 320 connected to the heat exchange plates 310, chambers configured to accommodate the heat exchange media are disposed inside the heat exchange plates 310, and the heat exchange pipeline 320 are communicated with the chambers of the heat exchange plates 310 and configured to convey/output the heat exchange media to the heat exchange plates 310. The heat exchange plates 310 may heat or cool the battery cells 210 so as to adjust the temperature of the battery cells 210. The heat exchange media may be liquid or gas, the liquid may also include water, ethanol, and the like, and the gas may be air. The heat exchange media can circulate inside the heat exchange plates 310 and the heat exchange pipeline 320.

The heat exchange plates 310 are connected to the plurality of battery cells 210 of the battery units 200, and the heat exchange plates 310 may be bonded to or in contact connection to the plurality of battery cells 210 of the battery units 200.

Optionally, the first direction X and the second direction Y are perpendicular to each other.

In the technical solution of the embodiment of this application, the battery 10 includes the housing 100, the battery units 200 and the thermal management assembly 300, and the battery units 200 and the thermal management assembly 300 are disposed in the housing 100. The housing 100 can provide the accommodating space 110 configured to accommodate the battery units 200 and the thermal management assembly 300. The battery units 200 include the plurality of battery cells 210, and the battery cells 210 are configured to store energy. At least two battery cells 210 in the plurality of battery units 200 have different chemical systems. By reasonably selecting the battery cells 210 with different chemical systems and integrating the advantages of the battery cells with different chemical systems, the reliability of the battery can be improved. The heat exchange plates 310 of the thermal management assembly 300 is disposed on a side of the battery units 200, and the heat exchange plates 310 can accommodate the heat exchange media and be configured to adjust the temperature of the battery cells 210. For example, the heat exchange plates 310 can accommodate a cooling medium to reduce an operating temperature of the battery cells 210, thereby alleviating the reliability problem of the battery cells 210 caused by overhigh temperature, and further improving the reliability of the battery 10.

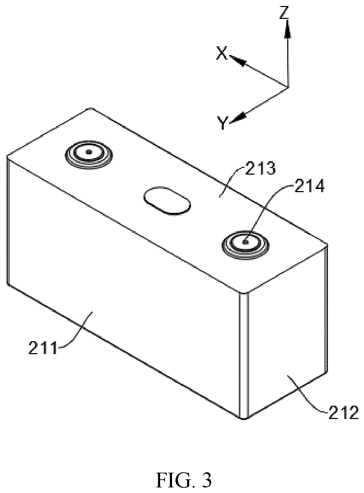

Referring to FIG. 2 and FIG. 3 together, FIG. 3 is a schematic structural diagram of a battery cell 210 of a battery unit 200 of a battery 10 according to an embodiment of this application.

In some embodiments, as shown in FIG. 2 and FIG. 3, the battery cell 210 includes a first surface 211, the first surface 211 is a surface with the largest area in the battery cell 210, and one heat exchange plate 310 is connected to the first surfaces 211 of the battery cells 210.

Optionally, the heat exchange plate 310 is bonded to the first surfaces 211 of the battery cells 210.

Optionally, the battery cells 210 may be cylindrical battery cells 210, and the first surfaces 211 are curved. Alternatively, the battery cells 210 may be polyhedrons, such as hexahedral structures, and the first surfaces 211 are planar.

In the embodiments, the surface with the largest area in the battery cell 210 is connected with the heat exchange plate 310, which can improve the efficiency of the heat exchange plate 310 in adjusting the temperature of the battery cell 210, for example, the battery cell 210 can be cooled faster, and the reliability of the battery can be further improved.

In some embodiments, continuing to refer to FIG. 2 and FIG. 3, the battery cell 210 includes two first surfaces 211 opposite each other along the second direction Y, and at least one of the first surfaces 211 is connected to the heat exchange plate 310.

Optionally, the battery cell 210 further includes two first surfaces 211 opposite each other along the second direction Y and two second surfaces 212 opposite each other along the first direction X, the first surfaces 211 and the second surfaces 212 are connected, and an area of the second surfaces 212 is less than an area of the first surfaces 211. Optionally, the battery cell 210 further includes two first end faces 213 connected to the first surfaces 211 and the second surfaces 212 and opposite each other along a third direction Z. Optionally, the battery cell 210 further includes electrode terminals 214, and the electrode terminals 214 are disposed on at least one first end face 213. Optionally, the first surfaces 211, the second surfaces 212, and the first end faces 213 are external surfaces of the shell.

Optionally, two battery cells 210 adjacent to each other along the first direction X are bonded to each other through the second surfaces 212.

In the embodiments, the battery cell 210 includes two first surfaces with large areas, and at least one of the first surfaces 211 is connected to the heat exchange plate 310, which can ensure the temperature adjustment efficiency of the battery cell 210, and is also convenient for the heat exchange plate 310 to be disposed on either side of the battery cell 210 in the second direction Y.

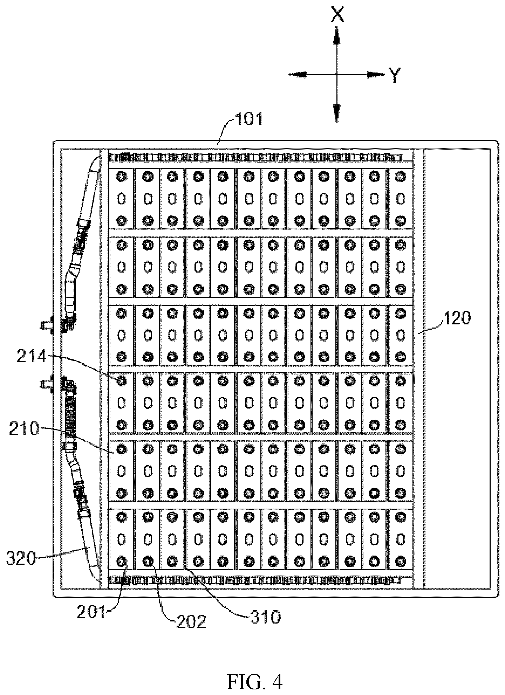

Referring to FIG. 2 and FIG. 4 together, FIG. 4 is a vertical view of a partial structure of a battery 10 according to an embodiment of this application.

In some embodiments, as shown in FIG. 2 and FIG. 4, the plurality of battery cells 210 in one battery unit 200 have the same chemical system.

Optionally, the same column of battery cells 210 disposed side by side along the first direction X in FIG. 4 belongs to one battery unit 200. Optionally, in other embodiments, the plurality of battery cells 210 in one battery unit 200 may have different chemical systems.

Optionally, the battery cells 210 may be selected from at least one of the lithium iron phosphate battery cells, the ternary battery cells and the sodium-ion battery cells, as long as the battery cells 210 in one battery unit 200 have the same chemical system.

In the embodiments, expansion rates and generated heat of the plurality of battery cells 210 in one battery unit 200 are closer, and the heat exchange plate 310 can better adjust the temperature of the battery cells 210 at a side of the battery unit 200. The problem of local stress concentration caused by inconsistent expansion rates of the plurality of battery cells 210 in the battery unit 200 can be alleviated, and the problem of uneven temperature caused by inconsistent heat generated by the plurality of battery cells 210 in the battery unit 200 can also be alleviated.

In some embodiments, as shown in FIG. 2 and FIG. 4, the plurality of the battery units 200 include first battery units 201 and second battery units 202 adjacent to each other along the second direction Y, the battery cells 210 of the first battery units 201 and the battery cells 210 of the second battery units 202 have different chemical systems, and the heat exchange plate 310 is disposed between each first battery unit 201 and the corresponding second battery unit 202.

Optionally, one of at least two adjacent battery units 200 in the battery 10 is the first battery unit 201 and the other is the second battery unit 202. Optionally, at least two adjacent battery units 200 in the battery 10 may both be the first battery units 201, or at least two adjacent battery units 200 in the battery 10 may both be the second battery units 202.

In the embodiments, the respective chemical systems of the plurality of battery cells 210 in the first battery units 201 and the second battery units 202 are the same, but the chemical systems of the battery cells 210 in the first battery units 201 are different from the chemical systems of the battery cells 210 in the second battery units 202. By reasonably selecting the chemical systems of the battery cells 210 in the first battery units 201 and the second battery units 202, the comprehensive advantages of the battery 10 can be improved. The heat exchange plate 310 is disposed between each first battery unit 201 and the corresponding second battery unit 202, such that the heat exchange plate 310 can adjust the temperature of the battery cells 210 in the first battery unit 201 and can also adjust the temperature of the battery cells 210 in the second battery unit 202, and the reliability of the battery 10 can be further improved.

In some embodiments, as shown in FIG. 2 and FIG. 4, the first battery units 201 and the second battery units 202 are alternately arranged along the second direction Y.

In the embodiments, the alternate arrangement of the first battery units 201 and the second battery units 202 can balance the comprehensive performance of the battery 10.

In some embodiments, the battery cells 210 of the first battery units 201 are sodium-ion battery cells, and the battery cells 210 of the second battery units 202 are lithium-ion battery cells; or
the battery cells 210 of the first battery units 201 are lithium iron phosphate battery cells, and the battery cells 210 of the second battery units 202 are ternary battery cells.

In the embodiments, when the battery cells 210 of the first battery units 201 are the sodium-ion battery cells and the battery cells 210 of the second battery units 202 are the lithium-ion battery cells, the battery cells 210 of the first battery units 201 generate less heat and have better low temperature resistance, while the battery cells 210 of the second battery units 202 have higher energy density and longer cycle life. Therefore, the battery 10 can have the advantages of less generated heat, low temperature resistance, high energy density and long cycle life. When the battery cells 210 of the first battery units 201 are the lithium iron phosphate battery cells and the battery cells 210 of the second battery units 202 are the ternary battery cells, the battery cells 210 of the first battery units 201 generate less heat, while the battery cells 210 of the second battery units 202 has higher energy density. Therefore, the battery 10 has the advantages of less generated heat and high energy density.

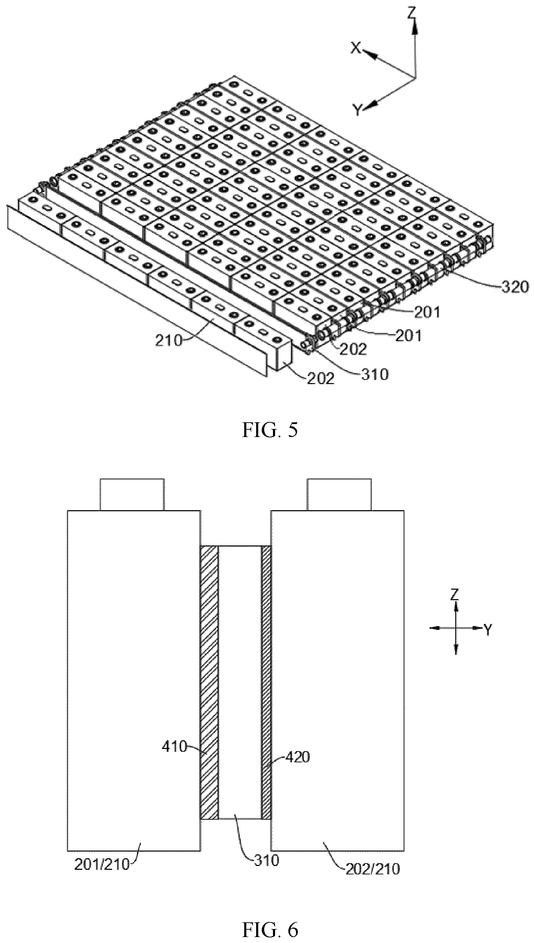

Referring to FIG. 2 and FIG. 5 together, FIG. 5 is a schematic structural diagram of a battery unit 200 of a battery according to another embodiment of this application.

In some embodiments, as shown in FIG. 2 and FIG. 5, two first battery units 201 and two second battery units 202 are alternately arranged along the second direction Y, and the heat exchange plate 310 is disposed between two adjacent second battery units 202.

In some embodiments, heat exchange plates 310 are disposed between two adjacent second battery units 202 as well as between the first battery unit 201 and the second battery unit 202 adjacent to each other, that is, the heat exchange plates 310 are disposed on both sides of each second battery unit 202, and the heat exchange plate 310 may not be disposed between adjacent first battery units 201.

In the embodiments, less heat is generated by the battery cells 210 in the first battery units 201, more heat is generated by the battery cells 210 in the second battery units 202, the heat exchange plate 310 is disposed between two adjacent second battery units 202 to better adjust the temperature of the plurality of battery cells 210 in the second battery units 202, but the heat exchange plate 310 may be not disposed between two adjacent first battery units 201, such that two first battery units 201 and two second battery units 202 are alternately arranged along the second direction Y, and the structure of the battery 10 can be simplified on the premise of ensuring the reliability of the battery 10.

In some embodiments, two first battery units 201 and a single second battery unit 202 are alternately arranged along the second direction Y.

In the embodiments, two first battery units 201 are disposed corresponding to one second battery unit 202, that is, a quantity of battery units 200 with low heat generation in the battery 10 is large, which can improve the reliability of the battery.

In some embodiments, at least one second battery unit 202 is disposed between two adjacent first battery units 201. For example, one, two, three or more second battery units 202 may be disposed between two adjacent first battery units 201, which can balance the comprehensive performance of the battery 10 or give full play to the advantages of the second battery units 202.

In some embodiments, at least one first battery unit 201 is disposed between two adjacent second battery units 202. For example, one, two, three or more first battery units 201 may be disposed between two adjacent second battery units 202, which can balance the comprehensive performance of the battery 10 or give full play to the advantages of the first battery units 201.

In some embodiments, the heat exchange plate 310 is disposed on at least one side of each first battery unit 201 in the second direction Y, and the heat exchange plates 310 are disposed on both sides of each second battery unit 202 in the second direction Y.

In the embodiments, less heat is generated by the battery cells 210 in each first battery unit 201, such that the reliability of the first battery unit 201 can be ensured by disposing the heat exchange plate 310 on at least one side of the first battery unit 201. However, more heat is generated by each second battery unit 202, and the reliability of the battery 10 can be further improved by disposing the heat exchange plates 310 on both sides of the second battery unit 202.

In some embodiments, the battery cells 210 of at least two adjacent first battery units 201 are bonded to each other.

Optionally, among at least two adjacent first battery units 201, at least two battery cells 210 correspondingly disposed along the second direction Y are bonded to each other.

Optionally, in other embodiments, the battery cells 210 of at least two adjacent first battery units 201 may also be in contact connection to each other.

In the embodiments, at least two adjacent battery cells 210 in each first battery unit 201 are bonded to each other, which can simplify the structure of the battery 10.

Referring to FIG. 2 to FIG. 6, FIG. 6 is a side view of a partial structure of a battery 10 according to an embodiment of this application.

In some embodiments, as shown in FIG. 2 to FIG. 6, the heat exchange plates 310 are bonded to the battery cells 210 of the first battery units 201 through first bonding layers 410, the heat exchange plates 310 are bonded to the battery cells 210 of the second battery units 202 through second bonding layers 420, and a thermal conductivity coefficient of the second bonding layers 420 is greater than a thermal conductivity coefficient of the first bonding layers 410.

Optionally, a material of the first bonding layers 410 is different from a material of the second bonding layers 420.

In the embodiments, more heat is generated by the battery cells 210 in the second battery units 202, and the thermal conductivity coefficient of the second bonding layers 420 is high, such that the heat exchange plates 310 can better adjust the temperature of the battery cells 210 in the second battery units 202, and the reliability of the battery 10 can be further improved.

In some embodiments, the heat exchange plates 310 are bonded to the battery cells 210 of the first battery units 201 through the first bonding layers 410, the heat exchange plates 310 are bonded to the battery cells 210 of the second battery units 202 through the second bonding layers 420, and a thickness of the second bonding layers 420 in the second direction Y is less than a thickness of the first bonding layers 410 in the second direction Y.

In the embodiments, the thickness of the second bonding layers 420 is small, such that heat can be transferred between the heat exchange plates 310 and the battery cells 210 of the second battery units 202 more quickly, and the heat exchange plates 310 can adjust the temperature of the battery cells 210 in the second battery units 202 more quickly.

In some embodiments, the housing 100 includes a wall portion 120 enclosing to form the accommodating space 110, and the battery cells 210 of the battery units 200 adjacent to the wall portion 120 include sodium-ion battery cells and/or lithium iron phosphate battery cells.

Optionally, the wall portion 120 may be platelike, for example, the wall portion 120 is a side plate of the housing 100. Alternatively, the wall portion 120 may be columnar, for example, the wall portion 120 is a beam of the housing 100.

In the embodiments, the battery cells 210 of the battery units 200 adjacent to the wall portion 120 are the sodium-ion battery cells and/or the lithium iron phosphate battery cells, expansion force of the sodium-ion battery cells and/or the lithium iron phosphate battery cells is low, and the sodium-ion battery cells and/or the lithium iron phosphate battery cells are adjacent to the wall portion 120 so as to alleviate the reliability problem caused by the deformation of the wall portion 120 and further improve the reliability of the battery 10.

In some embodiments, the plurality of battery cells 210 in one battery unit 200 have a same size in the second direction Y.

In some embodiments, the second direction Y is a thickness direction of the battery cells 210.

In the embodiments, the battery cells 210 in one battery unit 200 have the same size in the second direction Y, the heat exchange plate 310 disposed on a side of the battery unit 200 in the second direction Y may be disposed corresponding to the plurality of battery cells 210 of one battery unit 200, and a surface of the heat exchange plate 310 facing towards the battery unit 200 may be disposed in a plane shape, which is conducive to simplifying the structure of the heat exchange plate 310.

Optionally, the battery cells 210 in different battery units 200 have a same size in the second direction Y, which facilitates the arrangement of different battery units 200 and simplifies the structure of the battery 10.

Optionally, the battery cells 210 in one battery unit 200 have a same size in the first direction X. The first direction X may be a width direction of the battery cells 210. Therefore, the arrangement of the battery units 200 is facilitated.

Optionally, the battery cells 210 in different battery units 200 have a same size in the first direction X, that is, widths of the battery cells 210 in different battery units 200 are the same, such that the first battery units 201 and the second battery units 202 have a same size in the first direction X, and thus the shape of the housing 100 can be more regular.

Optionally, the battery cells 210 in one battery unit 200 have a same size in the third direction Z. The third direction Z may be a height direction of the battery cells, that is, heights of the battery cells 210 in one battery unit 200 are the same, and heights of the electrode terminals of the battery cells 210 are the same, which facilitates the arrangement of busbars configured to connect different electrode terminals.

Optionally, the battery cells 210 in different battery units 200 have a same size in the third direction Z, that is, the heights of the battery cells 210 of different battery units 200 are the same, such that the shape of the housing 100 can be more regular.

Optionally, the first direction X, the second direction Y and the third direction Z are perpendicular to one another.

In some embodiments of this application, an embodiment of this application further provides an electric apparatus, including the battery according to any one of the foregoing embodiments. The battery is configured to provide electrical energy.

The electric apparatus may be any one of the foregoing devices or systems using the battery.

Referring to FIG. 2 to FIG. 6, an embodiment of this application provides a battery 10. The battery 10 includes a housing 100, battery units 200 and a thermal management assembly 300. The housing 100 has an accommodating space 110. The battery units 200 are disposed in the accommodating space 110, the battery units 200 include a plurality of battery cells 210 disposed side by side along a first direction X, the plurality of battery units 200 are disposed side by side along a second direction Y, the first direction X and the second direction Y intersect, and at least two battery cells 210 in the plurality of battery units 200 have different chemical systems. The thermal management assembly 300 is disposed in the accommodating space 110, the thermal management assembly 300 includes heat exchange plates 310, the heat exchange plates 310 are disposed on at least one side of the battery units 200 in the second direction Y, the heat exchange plates 310 are connected to the plurality of battery cells 210 of the battery units 200, and the heat exchange plates 310 are configured to accommodate heat exchange media to adjust temperature of the plurality of battery cells 210 of the battery units 200. Each battery cell 210 includes a first surface 211, the first surface 211 is a surface with the largest area in the battery cell 210, and one heat exchange plate 310 is connected to the first surfaces 211 of the battery cells 210. The plurality of battery cells 210 in one battery unit 200 have the same chemical system. The plurality of the battery units 200 include first battery units 201 and second battery units 202 adjacent to each other along the second direction Y, the battery cells 210 of the first battery units 201 and the battery cells 210 of the second battery units 202 have different chemical systems, and the heat exchange plate 310 is disposed between each first battery unit 201 and the corresponding second battery unit 202. The first battery units 201 and the second battery units 202 are alternately arranged along the second direction Y. The battery cells 210 of the first battery units 201 are sodium-ion battery cells, and the battery cells 210 of the second battery units 202 are lithium-ion battery cells; or, the battery cells 210 of the first battery units 201 are lithium iron phosphate battery cells, and the battery cells 210 of the second battery units 202 are ternary battery cells.

Finally, it is hereby noted that the foregoing embodiments are merely intended to describe the technical solutions of this application but not to limit this application. Although this application has been described in detail with reference to the foregoing embodiments, those of ordinary skill in the art understand that modifications may still be made to the technical solutions described in the foregoing embodiments, or equivalent replacements may still be made to some or all technical features in the technical solutions. Such modifications and replacements do not make the essence of the corresponding technical solutions depart from the scope of the technical solutions of the embodiments of this application, but still fall within the scope of claims and specification of this application. In particular, the various technical features mentioned in the various embodiments may be combined in any manner as long as there is no structural conflict. This application is not limited to the specific embodiments disclosed herein but includes all technical solutions falling within the scope of the claims.

## Claims

1. A battery, **characterized by** comprising:
a housing having an accommodating space;
battery units disposed in the accommodating space, wherein the battery unit comprises a plurality of battery cells disposed side by side along a first direction, and the plurality of battery units are disposed side by side along a second direction, the first direction intersecting with the second direction; and at least two battery cells in the plurality of battery units have different chemical systems; and
a thermal management assembly disposed in the accommodating space, wherein the thermal management assembly comprises a heat exchange plate, the heat exchange plate is disposed on at least one side of the battery units in the second direction, the heat exchange plate is connected to the plurality of battery cells of the battery units, and the heat exchange plate is configured to accommodate a heat exchange medium to adjust temperature of the plurality of battery cells of the battery units.

2. The battery according to claim 1, **characterized in that** the battery cell comprises a first surface, the first surface is a surface with the largest area in the battery cell, and the heat exchange plate is connected to the first surface of the battery cell.

3. The battery according to claim 2, **characterized in that** the battery cell comprises two first surfaces opposite each other along the second direction, and at least one of the first surfaces is connected to the heat exchange plate.

4. The battery according to claim 1, **characterized in that** the plurality of battery cells in one battery unit have the same chemical system.

5. The battery according to claim 4, **characterized in that** the plurality of the battery units comprise a first battery unit and a second battery unit adjacent to each other along the second direction, the battery cells of the first battery unit and the battery cells of the second battery unit have different chemical systems, and the heat exchange plate is disposed between the first battery unit and the second battery unit.

6. The battery according to claim 5, **characterized in that** the first battery unit and the second battery unit are alternately arranged along the second direction.

7. The battery according to claim 5, **characterized in that**
the battery cells of the first battery units are sodium-ion battery cells, and the battery cells of the second battery unit are lithium-ion battery cells; or
the battery cells of the first battery units are lithium iron phosphate battery cells, and the battery cells of the second battery unit are ternary battery cells.

8. The battery according to claim 7, **characterized in that**
two first battery units and two second battery units are alternately arranged along the second direction, and the heat exchange plate is disposed between two adjacent second battery units; or
two first battery units and a single second battery unit are alternately arranged along the second direction.

9. The battery according to claim 7, **characterized in that** the heat exchange plate is disposed on at least one side of the first battery unit in the second direction, and the heat exchange plates are disposed on both sides of the second battery unit in the second direction.

10. The battery according to claim 7, **characterized in that** the battery cells of at least two adjacent first battery units are bonded to each other.

11. The battery according to claim 7, **characterized in that** the heat exchange plate is bonded to the battery cells of the first battery unit through a first bonding layer, the heat exchange plate is bonded to the battery cells of the second battery unit through a second bonding layer, and
a thermal conductivity coefficient of the second bonding layer is greater than a thermal conductivity coefficient of the first bonding layer; and/or
a thickness of the second bonding layer in the second direction is less than a thickness of the first bonding layer in the second direction.

12. The battery according to any one of claims 1 to 11, **characterized in that** the housing comprises a wall portion enclosing to form the accommodating space, and the battery cells of the battery unit adjacent to the wall portion comprise sodium-ion battery cells and/or lithium iron phosphate battery cells.

13. The battery according to any one of claims 1 to 11, **characterized in that** the plurality of battery cells in one battery unit have a same size in the second direction.

14. An electric apparatus, **characterized by** comprising the battery according to any one of claims 1 to 13, wherein the battery is configured to provide electrical energy.
